# EUROPEAN PATENT APPLICATION

(11) **EP 3 300 155 A1**
(43) Date of publication of application: **28.03.2018**
(21) Application number: 17020443.2
(22) Date of filing: 26.09.2017
(51) Int. Cl.: H01M 8/1027, B01D 71/52, B01D 71/62, C08J 5/22, H01M 8/103, H01M 8/1039, H01M 8/1048, H01M 8/1072, H01M 8/1018

(54) **CROSSLINKED WHOLLY AROMATIC PROTON CONDUCTIVE POLYMERIC ELECTROLYTES BASED ON QUINOLINE UNITS**

(30) Priority: 26.09.2016 GR 20160100491
(71) Applicant: University Of Patras, 26504 Rio Patras (GR); Foundation of Research and Technology Hellas/ Institute of Chemical Engineering Sciences (FORTH/ICE-HT), 26504 Patras (GR)
(72) Inventor: KALLITSIS, Constantinos, 26442 Patra (GR); KALLITSIS, Ioannis, 26442 Patra (GR); KAKOGIANNI, Sophia, 26223 Patra (GR); ANDREOPOULOI, Aikaterini, 26443 Patra (GR); NEOPHYTIDIS, Stylianos, Ag. Vassilios Patron, 26504 (GR); DALETOU, Maria, 26442 Patra (GR)
(74) Representative: Malamis, Alkisti-Irene

(57) **Abstract**

The current invention presents new polymer electrolytes comprising phenyl-quinoline units. These polymers are prepared through the homopolymerization of A-B difunctional monomers of phenyl-quinoline that bear simultaneously hydroxyl-phenyl and polyfluorinated phenyl rings. Extended studies were performed for the optimization of the polymerization conditions and of the molecular characteristics of the final homopolymers. Further stabilization of the polymeric structures is achieved via cross-linking of the polymeric chains through nucleative aromatic substitution of the remaining fluorine atoms of the structures that bear polyfluorinated rings. As cross-linkers are employed aromatic dihydroxyl substituted compounds either monomers or homo-oligomers or co- oligomers having free end hydroxyl units. Membranes of the above polymers were characterized for their properties such as mechanical, thermal and doping ability in strong protic acids. The membranes were used for the preparation of membrane electrode assemblies (MEAs) and were studied in single fuel cells presenting high ionic conductivities and operational stability at temperatures from 160°C up to 210°C.

## Description

### Field of the invention

The present invention refers to the development of novel polyether electrolytes for application in high temperature polymer electrolyte membrane fuel cells.

### Technical background of the invention

Polymer electrolyte membrane fuel cells (PEM-FCs) are one of the most promising technologies for the production of clean energy with negligible or zero emission of pollutants for stationary or transportation applications, mainly due to their high overall energy production yield.

In this type of fuel cells, the polymer electrolyte acts as the proton conductor while simultaneously IT separates the anode and the cathode compartments both electrochemically and electrically. It is widely known, that the operation of the polymer electrolyte membrane fuel cells at higher temperatures (HT-PEMFCs) offers the following advantages:
(1) optimization of the reaction kinetics at both electrodes
(2) simplification of the cooling system due to the higher temperature difference between the operating cell and the coolant
(3) the produced heat can be recovered and used, thus further increasing significantly the overall systems yield.
(4) the tolerance to CO is drastically enhanced (e.g. from 10-20 ppm to CO at 80°C to 1000 ppm at 130°C and even up to 30000 ppm at 200°C, J. Electrochem. Soc. 150, 2003, A1599). This increased tolerance to CO allows the use of hydrogen that is directly produced from a natural gas or alcohol reformer. Therefore the reformer's water-gas-shift reactor, the selective oxidation part and/or the separation membrane for the removal of CO can be omitted from the produced fuel processing system.

However and even up to now, a further increase of the operation temperature of HT-PEMFCs above 200°C has not been achieved.

The present invention and the polymeric materials herein described provide a viable and valuable solution for operation of HT-PEMFCs at temperatures above 200°C and therefore, allows their use in several applications, of which the previous PEM-FCs were excluded. For example, the combination of methanol reformer with a PEM fuel cell in a single system or the electrochemical purification of hydrogen via a polymer electrolyte membrane. More specifically the present invention provides solutions to the above mentioned shortcomings and ensures the below advantages, among others:
(a) A PEMFC operating at temperatures of 200°C and above, can be directly combined with a methanol reformer, since the reforming reaction of methanol towards the production of hydrogen is performed at the same temperature range. In such a combined closed loop system there is no requirement for additional heating or cooling of the produced hydrogen fuel feed before its insertion in the FC compartment.
(b) Applications of such HT-PEMFCs are envisaged, that were not foreseen for previous PEMFCs, such as combined methanol reforming-fuel cell systems, electrochemical hydrogen purification through a polymeric membrane, cogeneration of electricity and steam water heating systems.

### Detailed description of the invention

The polymer electrolyte membranes described in the present invention are based on new polymeric structures, that have never been published up to now. These polymer membranes may comprise linear or cross-linked polymers, via chemical cross-linking that also has never been presented before for the development of such type of polymer electrolyte membranes.

The advantages of these novel polymeric structures are:
- The polymer membranes of the present invention are prepared from difunctional A-B type monomers. The presence of both the required functionalities onto the same molecule offers the advantage of minimal stoichiometry effects of the monomers on the molecular weight of the final polymer and thus, high molecular weight membranes can be actually achieved.
- The polymer membranes of the present invention comprise, in their chemical structure, only polyether bonds and thus present increased thermal and chemical stability compared to previous aromatic polyether sulfones based on pyridine units ("Pyridine Containing Aromatic Polyether Membranes" J. K. Kallitsis, A. K Andreopoulou, M. Daletou, S. Neophytides, Chapter 5, pg 91-126, in Part I: Approaches to HTPEM Fuel Cells, in "High Temperature Polymer Electrolyte Fuel Cells - Approaches, Status and Perspectives", Springer International Publishing Switzerland, ISBN 978-3-319-17081-7, ISBN 978-3-319-17082-4 (eBook), DOI 10.1007/978-3-319-17082-4, Edited by: Q. Li, D. Aili, H. A. Hjuler, J. O. Jensen, 2016).
- Due to their chemical structure the polymer membranes of the present invention may operate at higher temperatures in a HT-PEMFC than the state of the art representative material of this category, namely the polybenzimidazole (PBI).
- Moreover, after their impregnation (doping) in strong protic acids the membranes of the present invention provide doped polymer electrolyte membranes of higher ionic conductivities related to known today analogous polymeric membranes.
- The swelling-expansion behaviour of the herein described polymer membranes after doping in strong protic acids is different than those described in current literature. Due to their exact chemical structure, the polymer membranes of the present invention expand only along the z-dimension (axis) when absorbing phosphoric acid meaning they increase only their thickness, while at the same time they retain their other two dimensions. This behaviour is in strong contrast to the today known membranes that during doping in phosphoric acid increase their dimensions along all three axes simultaneously, meaning their length, width and thickness, dimensions x and y. This fact is extremely important for the operational stability of the final fuel cell system, since differentiations of the membranes' dimensions during operation due to humidity or temperature deviations create leak points. This drawback is minimized, or even totally diminished, with the technology described in the present invention.

The new polyether electrolytes disclosed in the present invention are intended for high temperature polymer electrolyte membrane fuel cells (HT-PEMFCs), bear quinoline units along their main chain polymeric backbone and are synthesized via polycondensation of A-B quinoline difunctional monomers carrying both aromatic hydroxyl and aromatic fluorinated moieties. The herein presented polymer electrolytes can be further cross-linked toward cross-linked polymer electrolytes with creation of aromatic ether cross-linking bonds.

The produced polymer membranes combine excellent mechanical, thermal and oxidative stability. The polymeric membranes before or after cross-linking are doped with phosphoric acid at high doping levels leading to high ionic conductivity values in the order of 10⁻¹ S/cm.

In conclusion, the present invention discloses novel polymeric materials based on aromatic polyether backbones bearing quinoline units that are able to be cross-linked.

Preferably, the polymeric materials are synthesized via polyetherification at high temperatures of aromatic compounds of phenyl-quinoline bearing hydroxylated and fluorinated phenyl rings on the same molecule.

Preferably, these difunctional quinoline monomers of the A-B type, can be homopolymerized in the presence of an inorganic base such as potassium carbonate, sodium carbonate or cesium carbonate in high boiling point non protic solvents such as dimethylformamide, dimethylacetamide, N-methylpryrollidone, dimethylsulfoxide, and as shown below.

The presence of both required functionalities onto the same monomer provides the advantage of diminished exact stoichiometry effect of co-monomers in the polymeric mixture, for example due to the purity of the initial co-monomers, on the molecular weight of the final polymer, allowing thus the production of high molecular weight polymers.

More specifically, the present invention describes for the first time polymer electrolytes bearing phenyl-quinolines that are prepared via homopolymerization polycondensation in a single step of α,β-difunctional monomers of phenyl-quinoline which carry aromatic hydroxyl units and aromatic fluorides. These polymer electrolytes are further stabilized in respect to their polymeric structure through cross-linking of the polymeric chains via nucleophillic aromatic substitution of the remaining fluorine atoms of the polyfluorinated phenyl rings.

Preferably, for this type of polymer electrolytes the cross-linkers employed are aromatic molecules with hydroxyl units or even oligomers of homo- or co-polymers that possess free end hydroxyl functionalities. Thus, during cross-linking, aromatic ether bonds are formed as the cross-linking bonds.

In addition the invention presents membranes of the above polymer electrolytes, that possess high ionic conductivity values and that have increased thermal stability in the temperature range of interest, namely from 160°C up to ans including 210°C.

Preferably the polymer electrolytes of the present invention before or after their cross-linking are doped with phosphoric acid at high doping levels leading thus to high ionic conductivities.

Disclosed are also polyether poly-electrolytes applied in high temperature polymer electrolyte membrane fuel cells.

We disclose also a method for the preparation of the polymer electrolytes of the present invention via high temperature polycondensation of aromatic compounds of phenyl-quinoline bearing simultaneously hydroxyl and polyfluorinated aromatic units onto the same molecular entity.

The present method provides the advantage that difunctional A-B type monomers of quinoline are homopolymerized via polycondensation in the presence of inorganic base such as sodium or potassium or cesium carbonate in high boiling point non-protic solvents such as dimethylformamide, dimethylacetamide, N-methyl pyrollidone, dimethylsulfoxide etc.

The present invention discloses also the synthesis of homopolymer aromatic polyethers of phenyl-quinoline from A-B difunctional monomers carrying hydroxyl groups and polyfluorinated phenyl ring in which R=H, F.

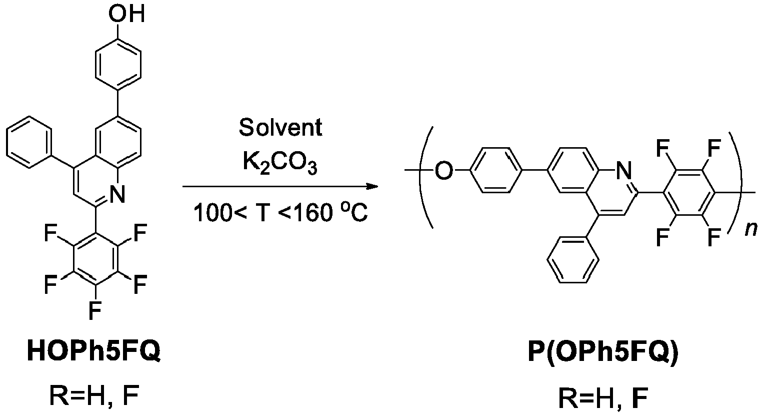

The present invention provides also the advantage that these polymer electrolyte membranes when doped with phosphoric acid at different temperatures and for different periods of time, depending on the exact composition of each membrane, their dimensions before and after doping along the x,y axes are only differentiated by a percentage of 0-10%. Preferably, the polymer electrolyte membranes of the present invention are cross-linked at different percentages, which in combination with the modulation of their exact chemical structure allow the development of polymeric membranes of controlled doping levels, from 250 - 500 %wt, thermal stability above 400°C and high ionic conductivities above 0.1 S/cm.

Synthesis of homopolymer aromatic phenyl-quinoline polyethers starting from an A-B difunctional monomer bearing hydroxyl groups and polyfluorinated phenyl rings in which R=H, F.

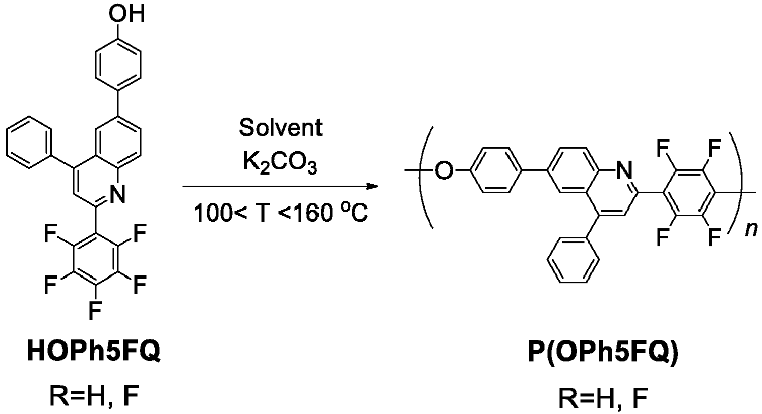

**Table 1** depicts the molecular characteristics of the described homopolymers, via size exclusion chromatography, for different polymerization conditions, together with the quality of the respective membranes.

These polymeric materials present high thermal and oxidative stability, increased and simultaneously controlled doping levels with phosphoric acid and high ionic conductivity values. The particular materials are applicable as the polymer electrolytes in high temperature polymer electrolyte fuel cells / HT-PEMFCs. Of particular advantage is the fact that the procedures and materials disclosed in the present invention are of low cost and the produced polymer membranes combine all prerequisites for a successful application in fuel cells operating above 200°C.

**Table 1: Molecular characteristics, via size exclusion chromatography, and quality of the final membranes for homopolymers P(OPhFQ) where R=F, prepared under different polymerization conditions**

| **a/a** | **SEC^{a}** | | | **Polymerization Conditions** | **Membrane Quality^{b}** | **Solubility^{c}** |
|---|---|---|---|---|---|---|
| | **Mn** | **Mw** | **PD** | | | |
| **1** | 52400 | 260940 | 4.9 | 1 h@120°C | 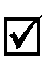 | 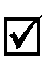 |
| | | | | 4h@150°C | | |
| | | | | 4h@170°C | | |
| **2** | 5100 | 7500 | 1.5 | 1 h@140°C | 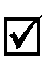 | 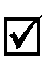 |
| | | | | 2h@160°C | | |
| | | | | 1 h@170°C | | |
| **3** | 15000 | 43800 | 2.9 | 2h@120°C | 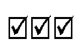 | 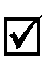 |
| | | | | 2h@140°C | | |
| | | | | 2h@160°C | | |
| **4** | 20560 | 49300 | 2.4 | 0.5h@120°C | 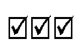 | 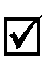 |
| | | | | 2h@130°C | | |
| | | | | 4h@160°C | | |
| **5** | 10700 | 22400 | 2.1 | 2h@120°C | 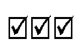 | 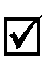 |
| | | | | 6h@140°C | | |
| **6** | 9300 | 28000 | 2.9 | 1 h@120°C | 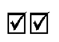 | 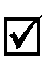 |
| | | | | 6h@140°C | | |
| **7** | 13000 | 50000 | 3.8 | 1 h@120°C | 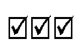 | 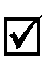 |
| | | | | 4h@140°C | | |
| | | | | 3h@150°C | | |
| **8** | 13500 | 51000 | 3 | 1h@120°C | 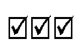 | 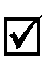 |
| | | | | 4h@140°C | | |
| | | | | 3h@150°C | | |
| | | | | 12h@110°C | | |
| **9** | 13800 | 51600 | 3.7 | 4h@100°C | 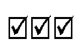 | 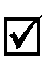 |
| | | | | 10h@140°C | | |
| **10** | 21000 | 43200 | 2.1 | 12h@110°C | 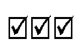 | 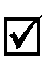 |
| **11** | 19100 | 54200 | 2.8 | 12h@110°C | 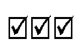 | 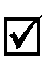 |
| **12** | 22000 | 56300 | 2.6 | 12h@110°C | 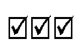 | 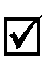 |
| **13** | 19800 | 42300 | 2.1 | 12h@110°C | 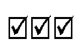 | 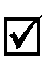 |

| | | | | | | |
|---|---|---|---|---|---|---|
| ^{a}) SEC using CHCl₃ as eloquent, at 25°C, 1 mL/min, versus polystyrene standards ^{b}) 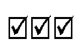 excellent, 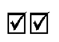 good, 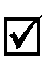 average, 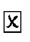 not good ^{c}) in N-methyl pyrollidone (NMP) at 60°C | | | | | | |

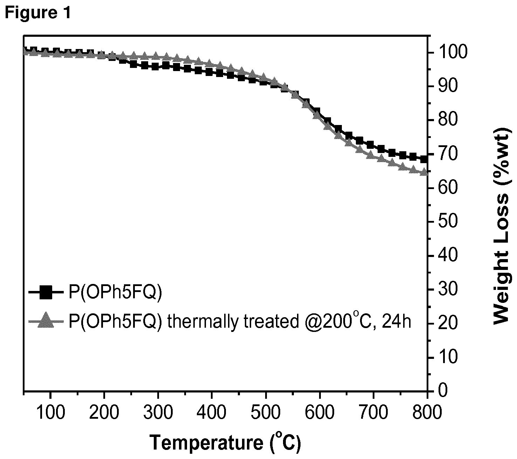

The homopolymers P(OPhFQ) present excellent thermal stability as proven from their thermogravimetric analysis examination. Examples of thermogravimetric analysis of homopolymer P(OPhFQ) where R=F (entry 10 of Table 1) are given in Figure 1.

Membranes of the homopolymers were doped in phosphoric acid for different periods of time and at different temperatures, depending on the exact chemical composition of the membrane. The doping level of the membrane is defined as the percentage by weight of acid per gram of polymer.

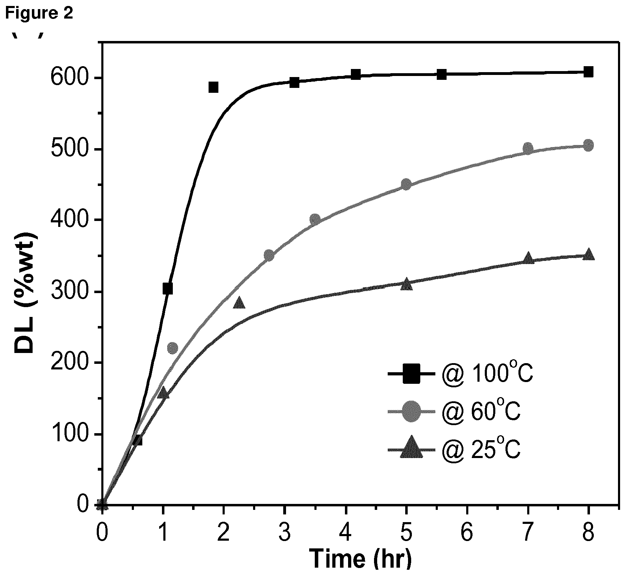

Examples of the doping level dependence over time for the homopolymer P(OPhFQ) where R=F (entry 12 of Table 1) are given in Figure 2. The doping level in phosphoric acid increases with temperature reaching maximum values for extended doping periods. Doping levels from 250 %wt to 500 %wt are desirable and preferable from 300 %wt to 400 %wt.

These particular quinoline homopolymes can be further cross-linked creating aromatic ether linkages after condensation reaction with aromatic dihydroxy compounds (aromatic diols) such as dihydroxyl-benzene, 4,4'-dihydroxyl-biphenyl, Bisphenol-A, tetramethyl-biphenyl-dihydroxy diol, 2,2'-diallyl-bisphenol-A.

Moreover, aromatic diols that bear units which may interact further with the doping agent, meaning the phosphoric acid, can also be used as cross-linkers. As such, diols that bear pyridine units may be used.

Likewise, it is possible that oligomers of aromatic polysulfones or respective aromatic polyethers may be employed as cross-linkers provided they are hydroxyl terminated at both their polymeric chain ends.

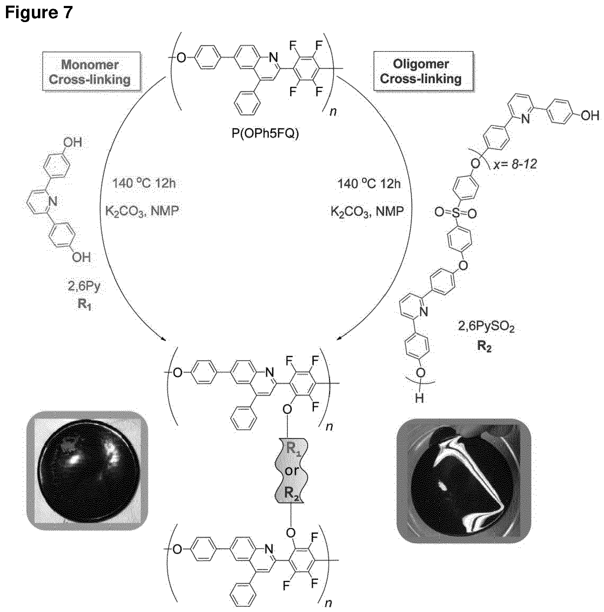

In the below Figure 7 is depicted the cross-linking route of hompolymers P(OPhFQ) where R=F, using either aromatic diols (monomer cross-linking) or polysulfone aromatic oligomers (oligomer cross-linking).

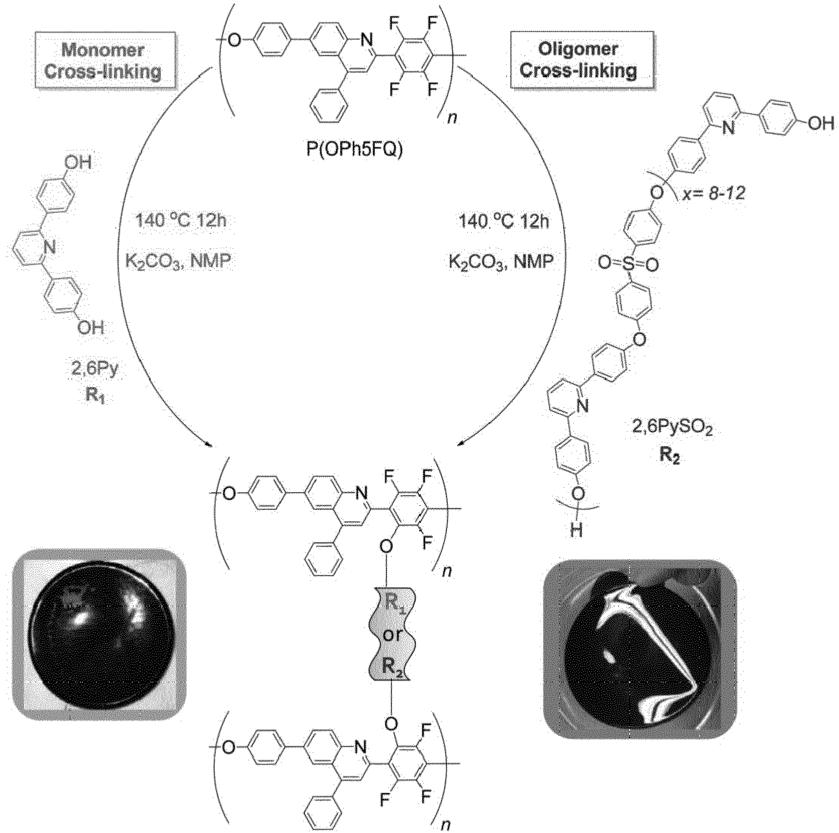

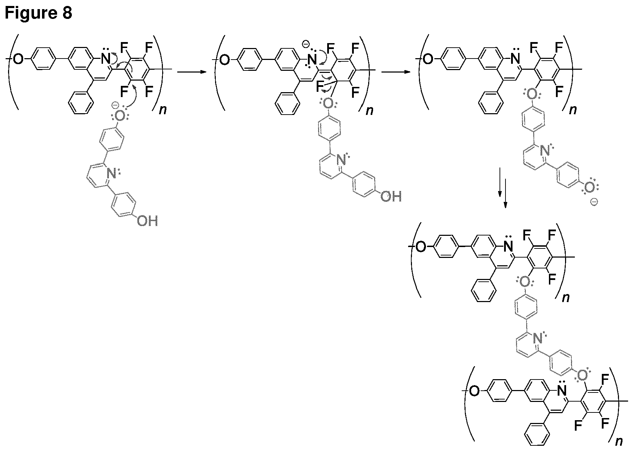

In more detail the mechanism of cross-linking through condensation of aromatic fluorines of the homopolymer with aromatic hydroxyls of the cross-linker is depicted in the below reaction for homopolymer P(OPhFQ) where R=F (Figure 8).

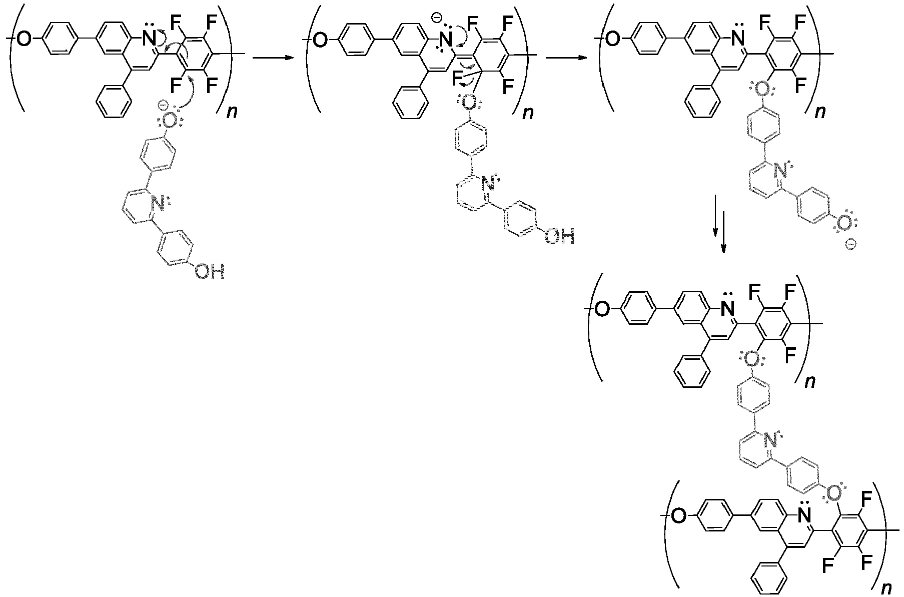

The cross-linking degree can be controlled through the quantity of the dihydroxyl bearing cross-linker as seen in Table 2 in which results of the cross-linking of homopolymer P(OPhFQ) are given, where R=F using various ratios of a diol bearing pyridine units or an end-hydroxyl terminated oligomer of polysulfone bearing pyridine units.

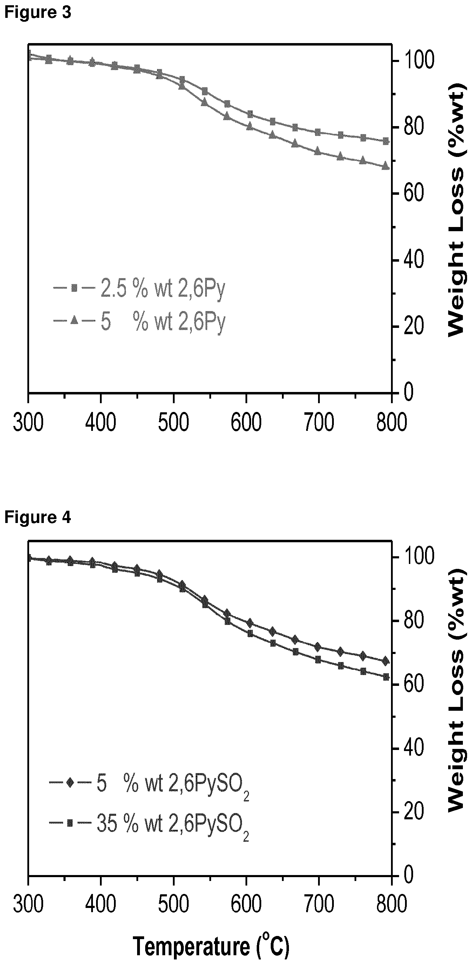

Characterization of the cross-linked polymers is performed using techniques such as thermogravimetric analysis and doping level examination. The excellent thermal stability of the initial homopolymers is preserved and in some cases further enhanced in the respective cross-linked membranes. Examples of the thermogravimetric analysis of cross-linked membranes are given in Figures 3 and 4, in which can be seen that the cross-linked membranes do not present any weight loss below 500°C. At 800°C the final weight loss of the cross-linked membranes lies between 25 %wt and 40 %wt depending on the cross-linking method and the cross-linking degree.

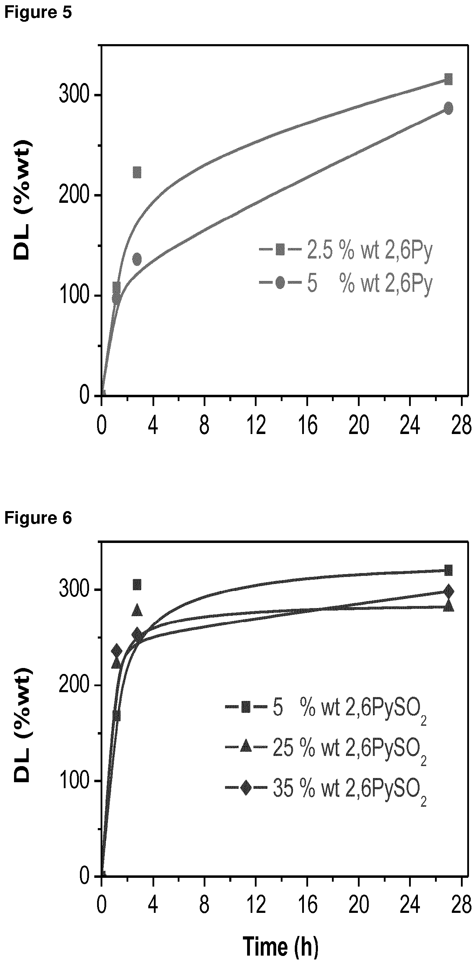

The ability of the cross-linked membranes to be doped with phosphoric acid at various temperatures is depicted in Figures 5 and 6. It is evident that the superior doping ability of the initial homopolymers is maintained even after cross-linking. Doping levels as high as 300 %wt can be achieved even at the low temperature of 60°C for membranes doped for only a few hours in the phosphoric acid doping medium.

**Table 2: Cross-linking degrees and quality of the final cross-linked membranes of homopolymer P(OPhFQ) where R=F using a monomer or an oligomer as the cross-linking agent, respectively.**

| **a/a** | **Cross-linking degree % wt** | **Membrane quality^{a}** | **Soluble Fraction^{b} %** |
|---|---|---|---|
| **Cross-linking using monomer 2,6Py** | | | |
| **CM1** | 2.5 | 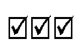 | 62 |
| **CM2** | 5 | 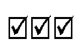 | 75 |
| **CM3** | 9 | 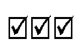 | 20 |
| **CM4** | 17 | 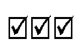 | 15 |
| **CM5** | 25 | 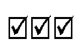 | 0 |
| **CM6** | 35 | 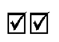 | 0 |

| **Cross-linking using oligomer 2,6PySO₂** | | | |
|---|---|---|---|
| **CO1** | 5 | 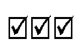 | 74 |
| **CO2** | 5 | 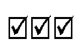 | 70 |
| **CO3** | 10 | 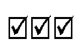 | 18 |
| **CO4** | 17 | 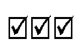 | 8 |
| **CO5** | 25 | 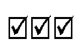 | 0 |
| **CO6** | 35 | 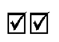 | 0 |

| | | | |
|---|---|---|---|
| ^{a}) 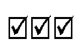 excellent, 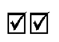 good, 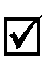 average ^{b}) in N-methyl-pyrollidone (NMP) at 80°C, 8 hr. | | | |

Of particular importance is the dimensional stability of the cross-linked membranes after doping, along the x,y axes. This fact is demonstrated in Table 3 that contains measurements of the cross-linked membranes dimensions before and after doping. Even for high doping levels such as 500%wt, the cross-linked membranes with cross-linking degrees of more than 10% present deviations in their dimensions along the x,y axes of 0-10%. On the contrary, there is a drastic increase of the membranes thickness after doping, meaning their z-axis dimension. This phenomenon is critical and offers great advantage for these cross-linked membranes applied in MEAs for HT-PEMFCs.

By this cross-linking methodology the membranes are stabilized both chemically and physically. Therefore, the operation temperature of the membranes and their MEAs can be increased above 180°C which is the typical operating temperature of such fuel cell systems today. Moreover, the ability to define the cross-linking degree, the exact cross-linking method (monomer vs. oligomer) in addition to the ability to control the exact structure of the initial and of the cross-linked membrane (via selection of the cross-linking agent) allows the creation of cross-linked membranes of controlled and well defined doping levels, thermal and mechanical stability.

The most important advantage of fuel cells operating at elevated temperatures is the ability to use hydrogen of lower purity as feed gas, without poisoning of the catalyst (increased lifetime of the catalytic system) and improved kinetics of the overall electrochemical reactions.

Another possibility offered by operating the fuel cell at a temperature above 200°C is the direct use of hydrogen produced from methanol reforming or the combination of the two systems, namely methanol reformer and fuel cell in one single system. (Triantafyllopoulos, N.; Geormezi, M.; Neophytides, S.; loannides, T.; Avgouropoulos, G.; Papavasiliou, I.; Daletou, M.; Kallitsis, J.; Internal Reforming Alcohol High Temperature PEM Fuel Cell,US Pub No: US-2010-0062293, Int. Pub No: WO 2010/029431)

The membrane electrode assembly is prepared in the following way.

The carbon support onto which the electrode is constructed maybe a carbon cloth or a carbon paper. Initially, a hydrophobic layer comprising carbon (20-70 %wt) and a hydrophobic polymer (30-80 %wt) is positioned on the carbon support. More particularly, a suspension of Teflon (polytetrafluoroethylene (PTFE) is mixed with carbon through mechanical stirring for 30min. The produced ink is coated onto the carbon support and after heating at 350°C for 40 min, this matrix becomes hydrophobic.

The platinum catalyst (Pt) supported onto carbon is dispersed in an isopropanol/water mixture. The noble metal to carbon ratio varies from 1 :9 to 4:6 and preferably 3:7. The catalyst ink is sprayed on top of the above mentioned hydrophobic layer. The prepared electrodes are dried under vacuum at 190°C for 1-2 h. The final Pt loading is thus 0.5-1.5 mg/cm².

Before the construction of the final membrane - electrode assembly (MEA) a certain amount of phosphoric acid (commonly 2 g_{H3PO4}/g_{Pt}) is sprayed on the electrode. Finally, the MEA is prepared either via thermal pressing of the sandwiched electrode-doped membrane-electrode using an automated pressing system (at 150°C and 0.1 t/cm² for 15 min) or directly in a single fuel cell with assembling forces of 4-4.5 N*m per screw of the cell (screws No=8). The active surface area of the electrodes is 4 cm² while the membrane is doped at a 100-400%wt doping level and its thickness varies from 90-350 um.

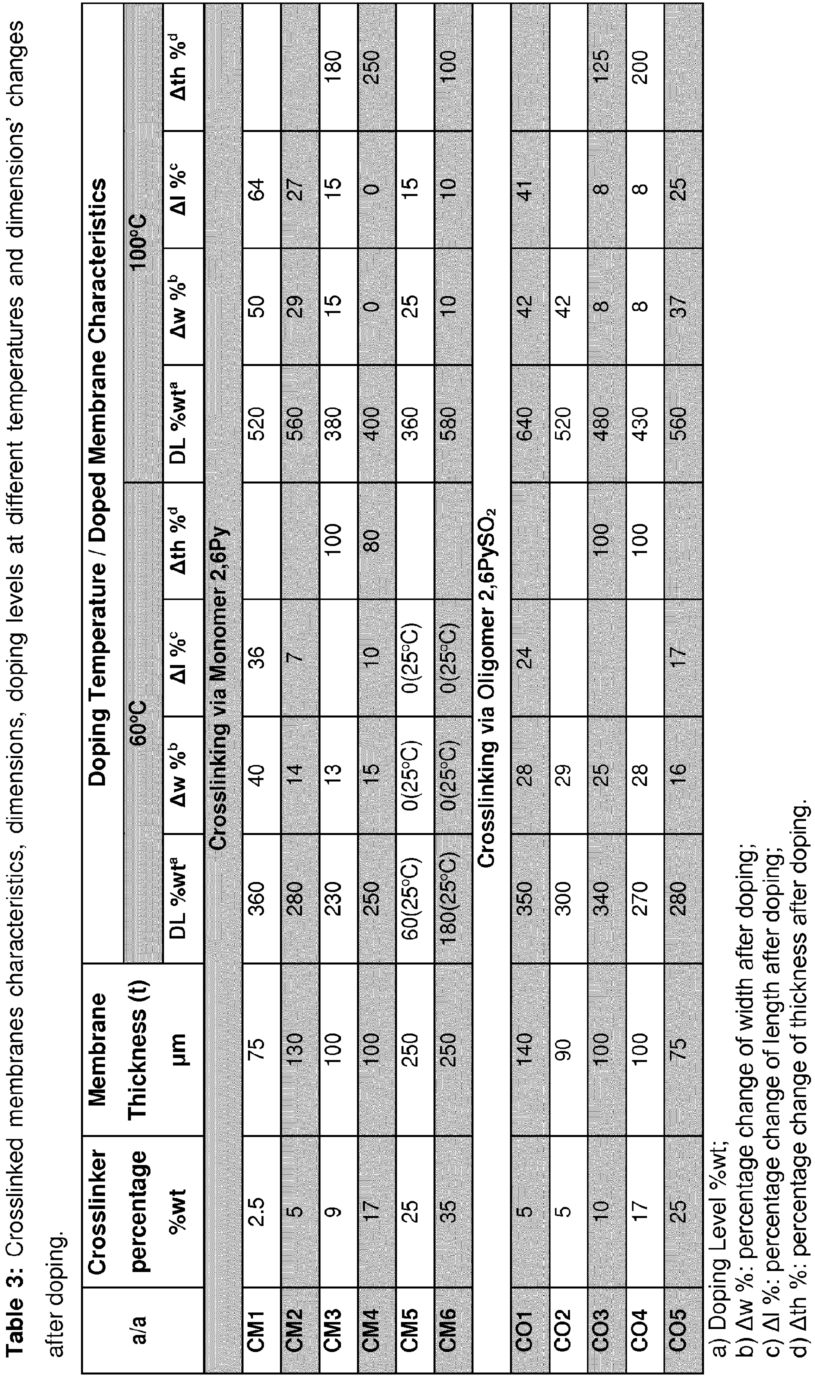

### Figures description

**Figure 1****:** TGA thermograms, under N₂ atmosphere, of homopolymer I before (-■-) and after (-▲-) thermal treatment.
**Figure 2****:** Doping level dependence over time for homopolymer I P(OPhFQ) where R=F, at temperatures 100°C, 60°C and 25°C
**Figure 3****:** TGA thermograms of homopolymer I P(OPhFQ) where R=F after cross-linking using an aromatic diol bearing pyridine (2,6Py).
**Figure 4****:** TGA thermograms of homopolymer I P(OPhFQ) where R=F after cross-linking using a polysulfone end-terminated oligomer (2,6PySO₂).
**Figure 5****:** Doping level dependence over time for homopolymer I P(OPhFQ) where R=F after cross-linking using an aromatic diol bearing pyridine (2,6Py), at different cross-linking ratios and at 60°C.
**Figure 6****:** Doping level dependence over time for homopolymer I P(OPhFQ) where R=F after cross-linking using a polysulfone end-terminated oligomer (2,6PySO₂), at different cross-linking ratios and at 60°C.
**Figure 7****:** Route of cross-linking of homopolymers P(OPhFQ) where R=F using an aromatic diol bearing pyridine (2,6Py) (Cross-linking via Monomer) or a polysulfone end-terminated oligomer (2,6PySO₂) (Cross-linking via Oligomer).
**Figure 8****:** Analytic description of the cross-linking mechanism via condensation of aromatic fluorine atoms of the homopolymer with aromatic hydroxyl units of the cross-linker. The mechanism is depicted for the homopolymer P(OPhFQ) where R=F.
**Figure 9****:** Conductivity values vs temperature of P(OPhFQ) where R=F membranes after cross-linking using an aromatic diol bearing pyridine (2,6Py) at a cross-linking degree of 17 %wt (CM4) or using a polysulfone end-terminated oligomer (2,6PySO₂) at a cross-linking degree of 25 %wt (CO5).
Conductivities were measured in situ from the corresponding MEAs (active area: 4 cm²) at several operating temperatures at 0.2 Acm⁻² using dry hydrogen and oxygen gases (stoichiometric ratio of 1.2 and 2, respectively) at ambient pressure.
**Figure 10****:** IV polarization curves of a single fuel cell of P(OPhFQ) where R=F after cross-linking using an aromatic diol bearing pyridine (2,6Py) at a cross-linking degree of 17 %wt (CM4) with a thickness of 230 um and a doping level of 250 %wt. The IV curves were obtained using dry hydrogen and oxygen or air gases with a stoichiometry of λ_{H2}=1.2 and λ_{O2}=2 at ambient pressure.
**Figure 11****:** Conductivity values vs temperature of P(OPhFQ) where R=F membranes after cross-linking using aromatic diols with non-dopable units namely diallyl-bisphenol-A or 4,4'-diphenyl diol, at a cross-linking degree of 20 %wt in both cases and with doping levels of 270 %wt and 250 %wt, respectively. Conductivities were measured in situ from the corresponding MEAs (active area: 4 cm²) at several operating temperatures at 0.2 Acm⁻² using dry hydrogen and oxygen gases (stoichiometric ratio of 1.2 and 2, respectively) at ambient pressure.
**Figure 12****:** IV polarization curves of a single fuel cell of P(OPhFQ) where R=F after cross-linking using an aromatic diol with non-dopable units namely diallyl-bisphenol-A at 160-200°C, at a cross-linking degree of 20 %wt with a doping level of 270 %wt. The IV curves were obtained using dry hydrogen and oxygen or air gases with a stoichiometry of λ_{H2}=1.2 and λ_{O2}=2 at ambient pressure.
**Figure 13****:** IV polarization curves of a single fuel cell of P(OPhFQ) where R=F after cross-linking using an aromatic diol with non-dopable units namely 4,4'-diphenyl diol at 160-200°C, at a cross-linking degree of 20 %wt with a doping level of 250 %wt. The IV curves were obtained using dry hydrogen and oxygen or air gases with a stoichiometry of λ_{H2}=1.2 and λ_{O2}=2 at ambient pressure.

### Examples

**The present invention provides the following representatives examples which should not be considered as limiting factors as to the breadth of the invention.**

### Characterization techniques

Gel Permeation Chromatography (GPC) or otherwise known as Size Exclusion Chromatography (SEC) which is employed for the molecular characteristics determination of the synthesized polymers (Mn, Mw and polydispersity PD).

Nuclear Magnetic Resonance Spectroscopy (NMR) used for the identification of chemical and molecular structure of polymers, and also purity of monomers and ratio of co-monomers in the case of copolymers.

Fourier transform infrared spectroscopy (FT-IR) used for the chemical and molecular composition of polymers in combination with NMR spectroscopy. Thermogravimetric Analyses (TGA) used for the thermal and oxidative stability evaluation of polymers before and after different treatments, like Fenton's test, doping in phosphoric acid etc.

Electrochemical studies in a single fuel cell (SINGLE FUEL CELL TEST): used for the efficiency evaluation of MEAs and the determination of actual conductivity of the membranes under real operating fuel cell conditions.

All homopolymers were studied using combinations of the above techniques in order to evaluate their properties and to identify their applicability as polymer electrolytes for HT-PEMFC applications.

### Example 1:

### Synthesis of Homopolymer P(OPhFQ) where R=F

In a flame-dried round bottom flask equipped with a reflux condenser were added under argon OHPh5FQ (2.00 g, 4.30 mmol), K₂CO₃ (0.89 g, 6.50 mmol) and NMP (50 mL). The mixture was degassed and filled with argon three times and then it was heated at 110°C for 12 h. The viscous solution formed was cooled at ambient temperature and the polymer was precipitated with methanol, filtered and dried under vacuum at 50°C for 8 h. Membranes of these homopolymers were prepared after dissolution of the polymer powder in NMP resulting to 3 %wt solutions. The solutions were casted in Pyrex Petri dishes in an oven at 80°C for the slow evaporation of the solvent. The membranes thus formed were additionally dried at 120°C under vacuum. The thickness of the membranes was around 80 - 120 µm.

### Example 2

**Cross-linking via the creation of ether bonds of the homopolymer P(OPhFQ) where R=F using the aromatic pyridine diol 2,6-bis(4-hydroxylphenyl)pyridine (2,6Py) at a 25%wt cross-linking degree.**

In a dry round bottom flask 0.55 g of P(OPh5FQ) where R=F, K₂CO₃ (0.23 g) and NMP (15 mL) were added and the resulting mixture was stirred at 110°C for 1 h. In another flask, 2,6-bis(4-hydroxyphenyl)pyridine (2,6Py) (0.18 g, 0.68 mmol), K₂CO₃ (7.50 mg, 0.54 mmol) and NMP (11.3 mL) were added and the resulting mixture was stirred at 110°C for 1 h. Then, the contents of the two flasks were mixed and stirred for 10 min at 110°C. The final mixture was quickly filtrated or centrifuged and placed in a covered Pyrex Petri dish in which it remained at 120°C under an inert atmosphere for 12 h. Then, the temperature was decreased to 80°C and the top dish was removed allowing for a slow evaporation of the organic solvent and casting of the crosslinked membrane. The membrane thus formed, was removed from the Petri dish and dried under vacuum at 100°C for 12 h for the complete removal of the solvent traces.

### Example 3

**Cross-linking via the creation of ether bonds of the homopolymer P(OPhFQ) where R=F using the polysulfone oligomer (2,6PySO₂) at a cross-linking degree of 23%wt.**

In a dry round bottom flask, 1.5 g of P(OPh5FQ) where R=F, K₂CO₃ (0.7 g) and NMP (40 mL) were added and the resulting mixture was stirred at 110°C for 1 h. In another flask, the hydroxy-terminated oligomer 2,6PySO₂ (0.45 g), K₂CO₃ (0.2 g) and NMP (4 mL) were placed and the resulting mixture was stirred at 110°C for 1 h. Then, the contents of the two flasks were mixed and stirred for 10 min. The final mixture was quickly filtrated or centrifuged and then placed in a covered Pyrex Petri dish in which it remained at 120°C under an inert atmosphere for 12 h. Then, the temperature was decreased to 80°C and the top dish was removed allowing for a slow evaporation of the organic solvent and casting of the crosslinked membrane. The membrane thus formed, was removed from the Petri dish and dried under vacuum at 100°C for 12 h for the complete removal of the solvent traces.

Analogue synthetic routes are employed for the preparation of all other homopolymers and cross-linked membranes at various cross-linking degrees or when using analogues cross-linkers either monomeric or oligomeric end hydroxyl terminated ones.

### Example 4

### Doping of membranes

The membranes were immersed in 85% phosphoric acid solution at the specified temperature for various time intervals. After each immersion, the samples were wiped with paper and the weight gain was calculated from the samples' weight before and after the immersion. The doping level is defined as the weight percent of the phosphoric acid per gram of each membrane.

### Example 5

### Single Fuel Cell Tests

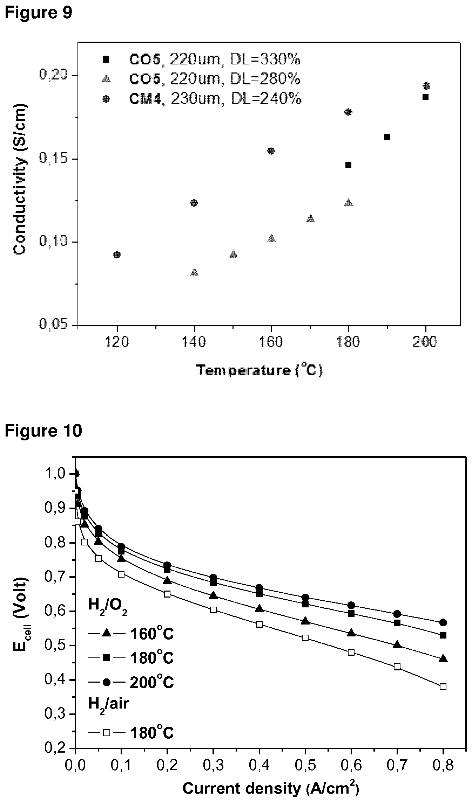

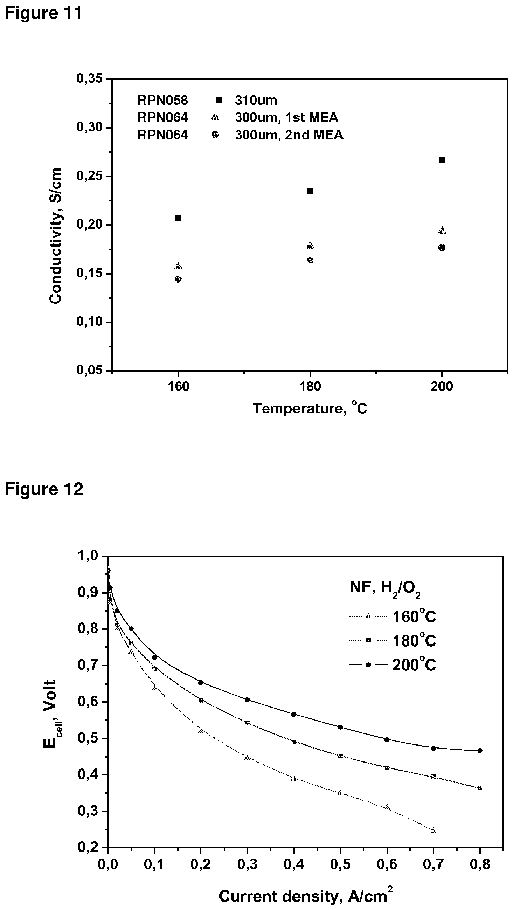

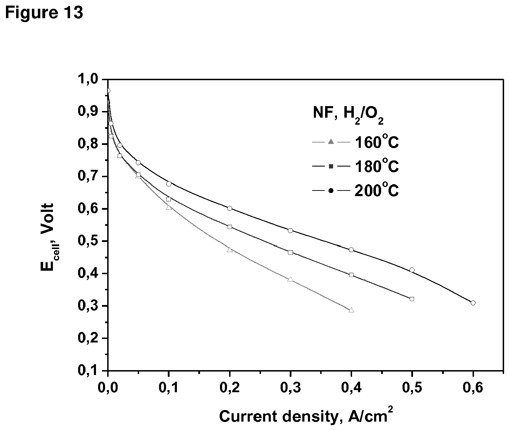

The membrane electrode assembly is prepared in the 2x2 cm² cell. The IV curves are obtained after the MEAs were first activated under normal fuel cell operation for 24 h at 0.2 A/cm², at 180°C and ambient pressure. Pure and dry hydrogen and oxygen (or air) gases were supplied to the anode and cathode compartments, respectively. A constant reactant utilization of 50% for oxygen and 83% for hydrogen were used for all measurements. Figure 10 depicts polarization curves (IV curves) obtained for P(OPhFQ) where R=F cross-linked using the aromatic pyridine diol 2,6-bis(4-hydroxylphenyl)pyridine (2,6Py) at a 17 %wt cross-linking degree (CM4 of Table 2) having a thickness of 230 um and a doping level of 250 %wt. Using pure dry oxygen at 160°C and at 200mA/cm² the cell's potential value was at 688mV while it increased at 722 mV at 180°C and at 734 mV at 200°C. Using air as the cathode feed gas and at 200 mA/cm² the cell's power density is 650 mV at 180°C. In analogy, Figures 12 and 13 depict polarization curves (IV curves) obtained for P (OPhFQ) where R=F cross-linked using aromati diols bearing non-dopable units namely diallyl-bisphenol-A and 4,4'-diphenyl diol, respectively, at a 20 %wt cross-linked degree in both cases.

Such cell efficiencies, although these measurements are initial and unoptimized, are comparable or even better those found in current literature for HT-PEMFCs. (Q. Li, J. O. Jensen, R. F. Savinell, N. J. Bjerrum, Progress in Polymer Science 2009, 34, 449-477).

## Claims

1. Polymeric electrolytes comprising phenyl-quinoline groups and that are prepared from the homopolymerization in a single step of A-B difunctional monomers of phenyl-quinoline that bear simultaneously groups of hydroxylphenyl and polyfluorinated-phenyls and to which is performed stabilization of the polymeric structure via cross-linking of the polymeric chains through nucleative aromatic substitution of the remaining fluorine atoms of the polymeric structures that contain polyfluorinated rings.

2. Polymeric electrolytes according to claim 1, where the cross-linkers are aromatic compounds bearing two hydroxyl units or oligomers of homo- or co-polymers with free end hydroxyl units, which leads to the creation of aromatic ether cross-linking bonds.

3. Membranes of the polymers according to each of claims 1 and 2 that present high conductivity values and high thermal stability at the temperature range of 160°C to 210°C.

4. Polymeric electrolytes according to any of claims 1 to 3, that before and after cross-linking are doped in phosphoric acid at high doping levels that leads to high conductivity values.

5. Use of the polyether electrolytes of according to any of claims 1 to 4 in high temperature polymer electrolyte fuel cells (HT-PEMFCs).

6. Method for the preparation of polymer electrolytes according to any one of claims 1 to 4 that are prepared through polyetherification at high temperatures of aromatic phenyl-quinolines bearing hydroxyl substituted phenyls and fluorinated phenyl rings on the same molecule.

7. Method according to claim 6, wherein the difunctional quinoline monomers of A-B type are homopolymerized in the presence of inorganic base such as sodium, potassium or cesium carbonate and in polar non protic solvents of high boiling points such as dimethylformamide, dimethylacetamide, N-methylpyrollidone, dimethylsulfoxide etc.

8. Synthesis of homopolymers of aromatic polyether of phenyl-quinoline from monomer of A-B type bearing hydroxyl and polyfluorinated phenyl rings, where R=H, F.

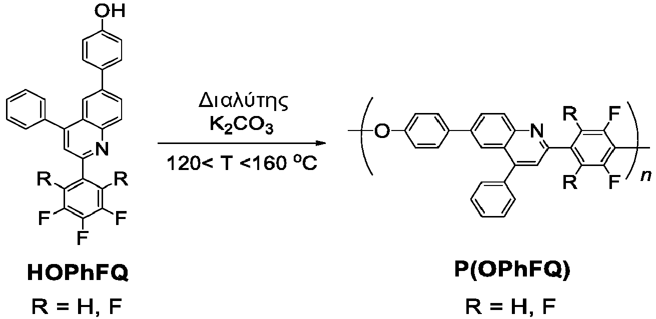

9. Membranes of polymer electrolytes according to any one of claims 1 to 4 that are doped in phosphoric acid at different temperatures and for different period of time depending on the composition of the membrane, that the dimensions of the cross-linked membranes before and after doping along the x,y axes deviate only by a 0 - 10 %.

10. Membranes polymer electrolytes according to any one of claims 1 to 4 and 9, wherein the cross-linking degree in combination with the control of the various structural characteristics of the membrane allow the creation of membranes of controlled doping levels of 250-500 %wt, thermal stability above 400°C and ionic conductivity of above 0.1 S/cm.
